(19) Europäisches Patentamt / European Patent Office / Office européen des brevets

(11) **EP 1 624 549 B1**

(12) **EUROPEAN PATENT SPECIFICATION**

(45) Date of publication and mention
of the grant of the patent:
**19.05.2010   Bulletin 2010/20**

(51) Int Cl.:
*H02K 7/00* (2006.01)     *F02B 67/06* (2006.01)

(21) Application number: **05017063.8**

(22) Date of filing: **05.08.2005**

(54) **Internal combustion engine belt-driven alternator**

Generator-Riementrieb einer Brennkraftmaschine

Alternateur entraîné par courroie d'un moteur à combustion interne

(84) Designated Contracting States:
**DE FR GB IT**

(30) Priority: **06.08.2004   JP 2004230742**

(43) Date of publication of application:
**08.02.2006   Bulletin 2006/06**

(73) Proprietor: **DENSO CORPORATION
Kariya-city,
Aichi-ken 448-8661 (JP)**

(72) Inventors:
• **Umeda, Atsushi
Kariya-city,
Aichi-pref. 448-8661 (JP)**
• **Shiga, Tsutomu
Kariya-city,
Aichi-pref. 448-8661 (JP)**
• **Ihata, Kouichi
Kariya-city,
Aichi-pref. 448-8661 (JP)**

(74) Representative: **Kuhnen & Wacker
Patent- und Rechtsanwaltsbüro
Prinz-Ludwig-Strasse 40A
85354 Freising (DE)**

(56) References cited:
WO-A-98/50709       FR-A- 2 435 618
FR-A1- 2 486 324    GB-A- 2 183 738
JP-A- 61 228 153    US-A- 2 041 555
US-A- 3 906 266

**Description**

BACKGROUND OF THE INVENTION

1. Field of the invention

The present invention relates to an engine belt-driven system according to claim 1.

2. Description of Related Art

From FR-A1-2 486 324 an engine belt-driven system is known which comprises a plurality of auxiliaries including a vehicle generator; a V-ribbed belt transmitting a torque from a vehicle engine to the plurality of auxiliaries. The vehicle generator is provided with a vibration absorbing device that is formed so as to filter vibrations excited on the electric machine for example in the form of the vehicle generator.

From US-A-3 906 266 a high inertia cooling fan for a power device driven by an electric motor is known. The fan includes a generally circular body of insulting material, e.g. plastic, including a hub to permit the fan to be mounted on the motor shaft, an annular flange extending radially outward from the hub, and a plurality of fan blades at the periphery of the annular flange. A weight of relative heavy material, e.g., metal, is secured to the annular flange between the hub and the fan blades to increase the inertia of the fan. The body of insulating material allows the fan to serve as an insulating barrier between the electric motor and other electric conductive components of the power device, and the weight provides increased inertia to allow the fan to act as a flywheel to reduce vibrations in the operation of the device.

From FR-A-2 435 618 a fan construction for electric machines is known which comprises a dynamic absorber mounted to a pulley, wherein the outer diameter of the pulley is smaller than 59 mm.

From WO 98/50709 A an engine belt-driven system is known which comprises a plurality of auxiliaries including a vehicle generator, a V-ribbed belt transmitting torque from a vehicle engine to the plurality of auxiliaries, wherein the vehicle generator is provided with a dynamic absorber made of metal and having an inertia moment smaller than an inertia moment of a rotor of the vehicle generator. The dynamic absorber includes a torsion spring configured to increase tightness thereof when compressed.

From JP 61 228 153 A a belt-drive method and apparatus are known wherein the rotational force of a drive shaft is accompanied by minute fluctuations in the angular velocity, and a driven shaft has rotational inertia. A one-way clutch is provided in the belt drive, which forms a selective interruption of the rotational force transmission through the belt drive while the angular velocity at the drive shaft side is decelerating, the force being transmitted only while the angular velocity is increasing.

It was common that a vehicle auxiliary such as a vehicle alternator (referred to as simply alternator hereinafter) is driven by a vehicle engine through a V-belt having a V-shaped cross section, and that the alternator is driven with a step-up ratio of at most 2 because of belt slippage. It was a bit challenge to reduce the engine vibration for the purpose of stabilizing the engine belt-driven system, thereby providing quiet vehicles.

It was known that the vehicle engine becomes unstable when a vehicle auxiliary having a large inertia moment exhibits low behavioral stability in the engine belt-driven system.

The alternator has a large inertia moment and is driven with a high step-up ratio compared to other vehicle auxiliaries. Accordingly, stabilizing the rotation of the alternator leads to stabilizing the rotation of the vehicle engine. For such reason, it has been studied to suppress the variation of the rotational speed of the alternator.

Generally, methods for suppressing vibration can be used as methods for suppressing rotational speed variation. Such methods include (1) stabilizing a vibration source by use of a dynamic vibration absorber (referred to as dynamic absorber hereinafter), and (2) insulating the vibration produced by the vibration source.

The dynamic absorber used in the method (1) can be constituted by a mass body having a mass about one tenth of that of the vibration source, and an elastic body having a spring constant and a damping constant matched to a target resonance frequency.

However, the method (1) had a problem in that it requires a mass as large as about one tenth of the alternator. In addition, the dynamic absorber had to be installed on the front end or the rear end of the alternator, because the alternator is provided with a cooling fan installed between its bearing and pulley. Accordingly, using the method (1) increased the axial length of the alternator. Also it lowered the durability of the alternator, because the alternator was attached with a substantial mass at a portion distant from its mass center, that results in the alternator bending.

Furthermore, in order to estimate what value the resonance frequency has, the method (1) requires performing numerical analysis for finding eigen values of motion equations of fifth or higher degree which cannot be solved theoretically in a case where the engine belt-driven system has five or more axes (belt-driven auxiliaries). It was practically impossible to perform such a numerical analysis even by use of a computer.

The method (2) uses an elastic member disposed in a transmission path of vibration to attenuate the vibration.

Examples of the method (2) include using a combination of a one-way clutch and a pulley, and using a combination of a damper and a pulley.

With this method (2) , the torque due to the rotational speed variation of the alternator is absorbed (insulated) by the one-way clutch or the damper, and thereby the engine belt-driven system is stabilized. The method (2) has been the mainstream of stabilizing the engine belt-driven system, because it does not require performing any complex numerical analysis.

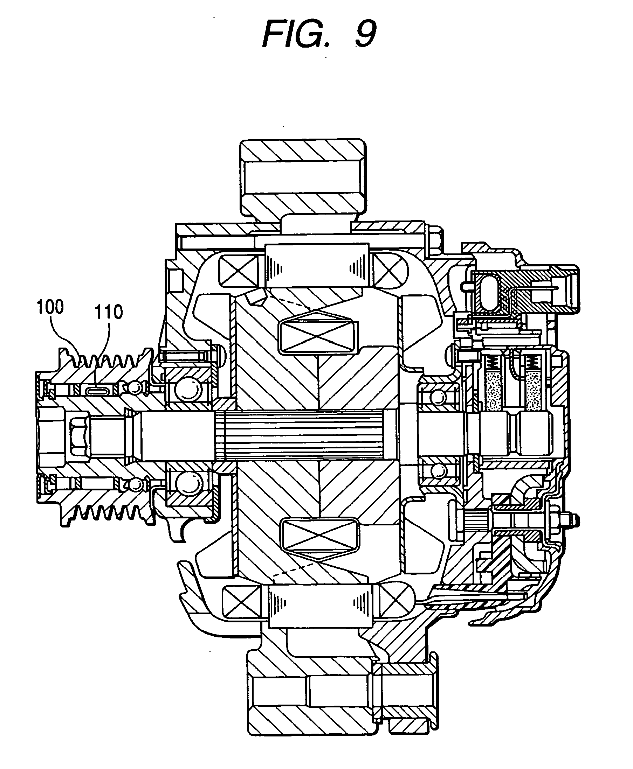

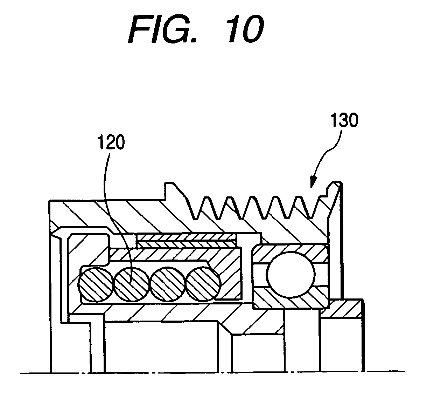

Examples thereof include providing the alternator with a one-way clutch 100 within a pulley 100 as shown in Fig. 9 (refer to Japanese Patent Application Laid-open No. 61-228153 for detail), and providing the alternator with a damper pulley 130 having an elastic member such as a torsion spring 120 thereinside as shown in Fig. 10 (refer to Published Japanese Translation No. 2001-523325 for PCT application for detail).

Incidentally, in recent years, V-ribbed belts with ribs having V-shaped cross sections formed on their driving surface are replacing the conventional V-belts. The V-ribbed belt allows the auxiliaries to be belt-driven with higher step-up ratios because of its low slippage characteristics.

The step-up ratio of an auxiliary is determined by a ratio of the diameter of a crank pulley of the vehicle engine to the diameter of a driven pulley of the auxiliary. Generally, the crank pulley is made to have a small diameter (190mm at most) in order to avoid belt slippage or breakage by an excessive centrifugal force. Since the output power of the alternator increases with the increase of its rotational speed, it is possible to downsize the alternator when it is driven with a high step-up ratio.

However, since, when an auxiliary is sped up, it has an equivalent inertia moment equal to its actual inertia moment multiplied by the square of the step-up ratio, although the actual inertia moment of the alternator can be reduced with the increase of the step-up ratio, the equivalent inertia moment of the alternator increases in proportion to the square of the step-up ratio.

Hence, if the alternator is driven with the step-up ratio as large as between 2 and 3, the equivalent inertia moment of the alternator becomes the largest factor in the unstableness of the engine belt-driven system. Especially, in the serpentine belt-driven system where a plurality of auxiliaries are driven through the same belt, its instability becomes worse, because the serpentine belt system is a multi-axis system, and has as many resonance points as there are axes (auxiliaries). As a result, the rotational speed variation and belt flapping in the case of using the V-ribbed belt becomes more serious than the case of using the conventional V-belt.

Engine belt-driven systems using such a V-ribbed belt have a problem in that it is difficult to provide a space large enough to accommodate the one-way clutch or elastic member as explained with reference to Fig. 9 or Fig. 10 within the alternator, and accordingly it is difficult to use the method (2), because the outer diameter of the pulley of the alternator is made small when the alternator is designed to be driven by the V-ribbed belt.

Typically, the outer diameter of the pulley is between 70mm and 100mm in the case of V-belt, while it is between 50mm and 65mm in the case of V-ribbed belt. The outer diameter of a usable space available within the pulley is equal to the outer diameter of the pulley subtracted by the depth of its grooves and its radial thickness.

In the case of the V-belt pulley whose outer diameter is between 70mm and 100mm, the diameter of the usable space is between 47mm and 77mm, when the depth of its grooves is at the typical value of 9mm and its radial thickness is at the typical value of 2.5mm While, in the case of the V-ribbed belt pulley whose outer diameter is between 50mm and 65mm, the diameter of the usable space is between 38mm and 53mm, when the depth of its grooves is at the typical value of 3.3mm and its radial thickness is at the typical value of 2.5 mm.

Accordingly, in the case of the V-ribbed belt pulley, it is difficult for the one-way clutch and the spring to have enough cross-sectional areas, though they are applied with torque larger than in the case of the V-belt pulley.

Incidentally, the above mentioned Published Japanese Translation No. 2001-523325 suggests using a slide spring which does not occupy a large space. However, it involves a problem of wear in sliding portions. In addition, it requires detailed and laborious spring design, which removes the advantage of the method 829 in design ease.

SUMMARY OF THE INVENTION

It is an object of the present invention to provide an engine belt-driven system which is less susceptible to engine vibration so as to realize an improved stabilization of the engine belt-driven system as a whole.

According to the present invention this object is solved by the features of claim 1.

Improved embodiments of the inventive engine belt-driven system result from the subclaims.

With the present invention, it is possible to improve the stability of engine belt-driven system without a sacrifice of the durability of the vehicle alternator, because the vehicle generator having a large inertial moment is provided with the dynamic absorber, and the dynamic absorber has a small inertial moment, so that the constituent elements of the dynamic absorber can be made to have large safety margins.

BRIEF DESCRIPTION OF THE DRAWINGS

In the accompanying drawings:

Fig. 1 is a layout diagram of an engine driven system according to a first embodiment of the invention;
Fig. 2 is a cross-sectional view of an alternator included in the engine driven system according to the first embodiment of the invention;
Fig. 3 is a plan view of a dynamic absorber included in the alternator of the engine driven system according to the first embodiment of the invention;
Fig. 4 is a graph showing results of resonance analysis made on the alternator of the engine driven system according to the first embodiment;
Fig. 5 is a cross-sectional view of an alternator of an engine driven system according to a second embodiment of the invention.
Fig. 6 is a partial cross-sectional view of an alternator of an engine driven system according to a third embodiment of the invention;
Fig. 7 is a diagram showing a cross section of a portion of an alternator near its pulley of an engine driven system according to a fourth embodiment of the invention;
Fig. 8 is a diagram showing a cross section of a portion of an alternator near its pulley of an engine driven system according to a fifth embodiment of the invention;
Fig. 9 is a cross-sectional view of a conventional alternator provided with a one-way clutch; and
Fig. 10 is a diagram showing a cross section of a damper pulley installed in a conventional alternator.

PREFERRED EMBODIMENTS OF THE INVENTION

First Embodiment

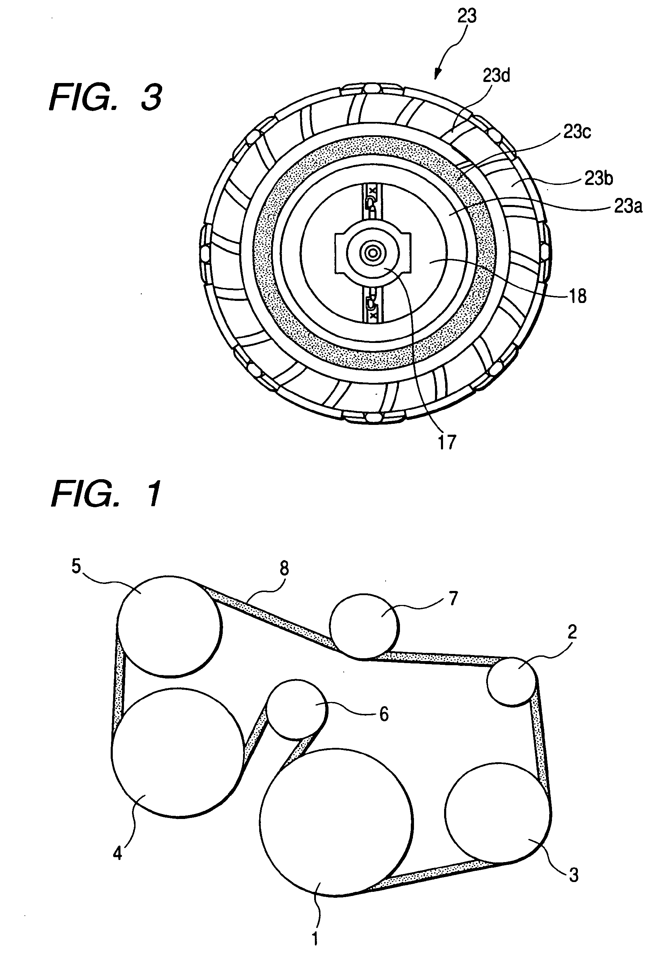

Fig. 1 is a layout diagram of an engine driven system according to a first embodiment of the invention. The engine driven system includes an alternator 2, an air conditioner compressor 3, a water pump 4, and a power steering hydraulic pump 5 as auxiliaries which are belt-driven by a vehicle engine 1. The engine driven system further includes an auto tensioner 6, and a V-ribbed belt 8 which couples pulleys of these auxiliaries to a crank pulley of the engine 1. This engine driven system is a serpentine belt-driven system.

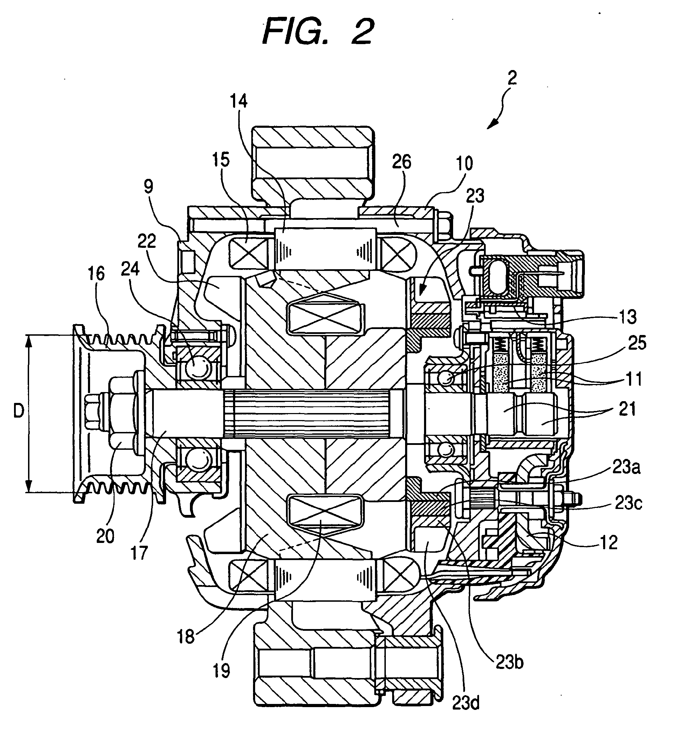

Fig. 2 is a cross-sectional view of the alternator 2. The alternator 2 includes a stator, a rotor, a front housing member 9, a rear housing member 10, a brush 11, a rectifier 12, and a voltage regulator 13. The stator includes an annular stator core 14, and an armature winding 15 wound around the stator core 14. When the rotor rotates, an AC voltage is induced in the armature winding 15.

The rotor includes a rotating shaft 17 to which the rotational driving force of the engine 1 is transmitted through a pulley 16, a rotor core (Lundel type pole core) 18 wound around the rotating shaft 17, and a field winding 19 wound around the rotor core 18.

The pulley 16 is secured to one end of the rotating shaft 17 by a nut 20. The pulley 16 has a plurality of parallel grooves having a V-shaped cross section formed on its circumference. The outer diameter of the pulley 16 is smaller than 59mm. The rotating shaft 17 is provided with a pair of slip rings 21 at the other end thereof. A cooling fan 22 which rotates integrally with the rotator core 18 for creating a cooling wind is fixed to the pulley side end surface of the rotator core 18. A dynamic absorber 23 is fixed to the non-pulley side end surface of the rotating shaft 18.

The front housing member 9 has a bearing 24 supporting one end of the rotating shaft 17, and the rear housing member 10 has a bearing 25 supporting the other end of the rotating shaft 17. The front and rear housing members 9, 10, between which the stator core 14 is held, are fastened to each other by a bolt 26. The brush 11, which is in a sliding contact with the slip rings 21, is for supplying a field current to the field winding 19. The rectifier 12 is for converting the AC voltage induced in the armature winding 15 into a DC voltage. The voltage regulator 13 is for controlling the output power by regulating the field current flowing through the field winding 19.

Next, the structure of the dynamic absorber 23 is explained referring to Fig. 3 which is a plan view of the dynamic absorber 23. The dynamic absorber 23 includes an inner annular ring 23a fixed to the non-pulley side end surface of the rotator shaft 18 by welding for example, an outer annular ring 23b disposed coaxially with the inner annular ring 23a, and an elastic member 23c which is made of a rubber, for example, and press-fitted between the inner and outer rings 23a, 23b. The elastic member 23c is capable of being displaced only in the torsional direction (the direction in which the rotor rotates). The inner and the outer rings 23a, 23b are displaced from each other when the elastic member 23c is displaced. The outer ring 23b has fan blades 23d integrally formed therein which create air resistance when the rotor rotates. The centrifugal wind created by the fan blades 23d is used for cooling the armature winding 15.

In the serpentine belt-driven system including a plurality of auxiliaries driven by the same engine, motion equations as many as the number of the axes (auxiliaries) hold. These motion equations are represented as the hollowing simultaneous equations (1).

$$J_n \ddot{\beta}_n = -c_n(R_n \dot{\beta}_n - R_{n-1} \dot{\beta}_{n-1}) \; R_n \; - \; c_{n+1}(R_n \dot{\beta} - R_{n+1} \dot{\beta}_{n+1})R_n \; - \; \kappa_n(R_n \beta_n - R_{n-1} \beta_{n-1})R_n$$
$$-\kappa_{n+1}(R_n \beta_n \; - \; R_{n+1} \beta_{n+1})R_n \; - \; P_n R_n \qquad \qquad ....(1)$$

$J_n$: inertia moment of the n-th auxiliary
$\ddot{\beta}_n$: angular acceleration of the n-th auxiliary
$\beta_n$: angular velocity of the n-th auxiliary
$\kappa_n$: belt spring constant upstream of the n-th auxiliary
$\kappa_{n+1}$ : belt spring constant downstream of the n-th auxiliary
$c_n$ : belt damping factor upstream of the n-th auxiliary
$c_{n+1}$ : belt damping factor downstream of the n-th auxiliary
$P_n$ : driving force of the n-th auxiliary
$R_n$ : radius of the n—th auxiliary

The above simultaneous equations tell that the serpentine belt-driven system has eigen frequencies (resonance frequencies) as many as the number of the axes (the number of the auxiliaries) .

When the frequency of the torque variation due to explosive combustion in engine cylinders matches any one of the resonance frequencies, a large rotational variation (resonance) develops in the serpentine belt-driven system. Especially, if the resonance occurs in the engine idle region, unpleasant vibration and noise due to the resonance become conspicuous, because there is not any vehicle travel vibration or vehicle travel noise in the engine idle region. Furthermore, such a rotational variation (resonance) force the belt to bear the burden, and the belt shortens its life accordingly.

It is known that the stability of the belt-driven system depends on the inertia moments of the auxiliaries or depend on the equivalent inertia moments of the auxiliaries when they are speeded up. The equivalent inertia moment is equal to the actual inertia moment multiplied by the value of the square of the step-up ratio (speed-up ratio), as shown in the following equation (2).

$$Jeq = \alpha^2 J \qquad ...(2)$$

Jeq:    equivalent inertia moment
$\alpha$:    step-up ratio
J:    actual inertia moment

Accordingly, to stabilize the serpentine belt-driven system, it is efficient to take measures on the auxiliary that has the largest equivalent inertia moment. Hence, in this embodiment, the alternator 2 driven with a step-up ratio of as large as 2 to 3.5 is provided with the dynamic absorber.

Although it has been considered that it is practically impossible to provide the alternator with a dynamic absorber in the engine belt-driven system, because of the fact that the alternator has a large inertia moment, and that the exceedingly complex numerical analysis has to be performed for finding eigen values of the motion equations of fifth or higher degree.

However, the inventors have observed that providing the alternator with the dynamic absorber for stabilizing the belt-driven system is possible in the present day. This observation is based on the fact that the actual inertia moment of the alternator is small in the serpentine belt driven-system, since the alternator is belt-driven through the V-ribbed belt with a step-up ratio as large as 2 to 3.5, and the complex numerical analysis required for finding eigen values of the motion equations of fifth or higher degree can be performed without difficulty by use of the latest high performance computers.

Next, explanation of how the inertia moment and spring constant of the dynamic absorber 23 are determined is set forth below.

Although the serpentine belt-driven system is a multi-axis system having as many resonance points as there are axes (auxiliaries) as described above, in this embodiment, the inertia moment and spring constant of the dynamic absorber 23 are set to such values as to suppress the resonance in the engine idle region, because the resonance point in the engine idle region is most serious of all the resonance points in engine vehicles.

It is possible, through modeling by use of eigen vectors derived from the simultaneous equations (1), to determine the mode equivalent inertia moment Ji and mode equivalent spring constant Ki corresponding to the resonance frequency in question, although detailed explanation is omitted in the interest of simplicity.

The mode equivalent inertia moment Ji, the mode equivalent spring constant Ki, and the resonance frequency Ki satisfy the following equation (3).

$$fi = \frac{1}{2\pi}\sqrt{\frac{Ki}{Ji}} \qquad ....(3)$$

To give an example, in a 6-cylinder engine, since the frequency of the torque variation due to explosive combustion in the engine cylinders is three times the rotational frequency of the engine, if the idle rotational speed is between 800rpm and 900rpm, the frequency of the torque variation is between 40Hz and 45Hz.

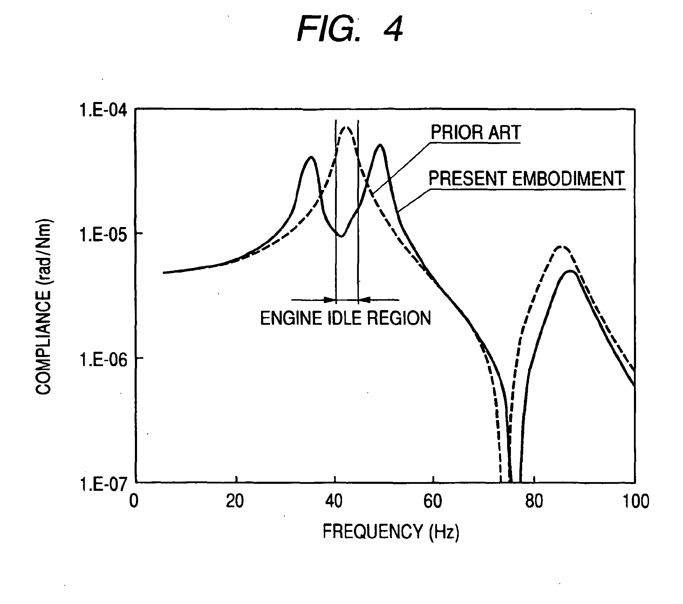

Fig. 4 is a graph showing results of the resonance analysis made on the engine driven system of the first embodiment. The vertical axis of the graph represents compliance representing the magnitude of the transfer function. To be more precise, the vertical axis represents the magnitude of the displacement of the rotor of the alternator 2 when the crank shaft of the engine 1 is added with a torque of 1N/m. The horizontal axis of the graph represents the frequency of the torque variation.

The broken-line curve in the graph represents the compliance-frequency characteristic when the rotor of the alternator 2 is not provided with the dynamic absorber 23. As seen from Fig. 4, the compliance-frequency characteristic has a resonance point at the frequency of 42Hz within the engine idle region.

The mode equivalent inertia moment Ji and the mode equivalent spring constant Ki corresponding to the resonance frequency of 42Hz can be determined to be 0.0041Kgm$^2$, and 289Nm/Rad, respectively. The dimension and material of the elastic member 23c of the dynamic absorber 23 are determined as such that the following equations (4) hold.

$$Jdi = \mu Ji$$

$$Kdi = Jdi\frac{Ki}{Ji}\left(\frac{1}{1+\mu}\right)^2$$

$$....(4)$$

$$Cdi = 2Jdi\sqrt{\frac{Ki}{Ji}}\cdot\sqrt{\frac{3\mu}{8(1+\mu)^3}}$$

In this embodiment, the value of $\mu$ is set at 0.1 so that the inertial moment of the dynamic absorber 23 is sufficiently smaller than that of the rotor of the alternator 2. More specifically, the dimension and material of the elastic member 23c of the dynamic absorber 23 are determined as such that Jdi equals to 0.00041Kgm$^2$, Kdi equals to 23.88Nm, and Cdi, which is a damping constant of the dynamic absorber 23 equals to 0.036Ns/m.

The solid-line curve in the graph of Fig. 4 represents the compliance-frequency characteristic when the rotor of the alternator 2 is provided with the dynamic absorber 23. As seen from this graph, the 42-Hz vibration can be suppressed by providing the rotor core 18 of the alternator 2 with the dynamic absorber 23 designed to damp the 42-Hz vibration. Although a new resonance point shows up near 50Hz, it does not cause any serious problem, because the new resonance point is not in the engine idle region but in the vehicle running region.

In this embodiment, the inertia moment of the dynamic absorber 23 is as small as about one tenth of that of the rotor. Accordingly, with this embodiment, the durability of the alternator can be improved greatly, because the constituent elements of the dynamic absorber 23 can be made to have large safety margins.

Furthermore, since the dynamic absorber 23 is installed in an idle space within the alternator 2 (the non-pulley side end surface of the rotor core 18), it is not necessary to upsize the alternator 2 to provide the alternator 2 with the dynamic absorber 23.

In addition, since the damping force of the dynamic absorber 23 is obtained as the air resistance of the fan blades 23d provided in its outer ring 23b, it is easy to design the dynamic absorber 23 to have a desired damping factor.

Furthermore, since the armature winding 15 is cooled efficiently by the centrifugal wind created by the fan blades 23d of the dynamic absorber 23, it is unnecessary to provide any additional cooling fan.

Although the dynamic absorber 23 is mounted to the non-pulley side end surface of the rotor core 18 in this embodiment, it may be mounted to the pulley-side end surface of the rotor core 18.

Second Embodiment

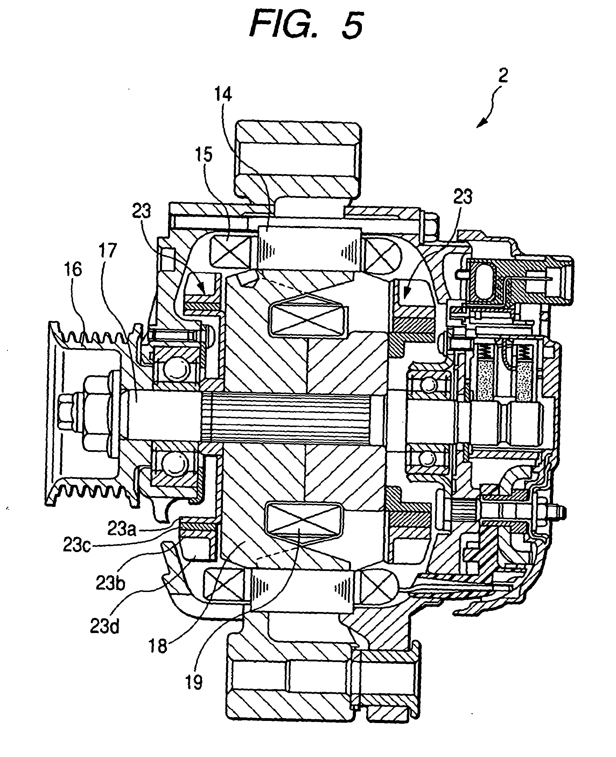

Fig. 5 is a cross-sectional view of an alternator 2 of an engine driven system according to a second embodiment of the invention. As shown in this figure, the alternator 2 of this embodiment has two dynamic absorbers 23 mounted to the both end surfaces of the rotor corer 18.

The alternator 2 of this embodiment has a still higher durability, because the inertia moment is spread to the both sides of the rotor core 18.

Incidentally, in this embodiment, it is necessary to change the spring constants of the dynamic absorbers 23 according to their masses.

The alternator of this embodiment has good self-cooling performance, since each of the dynamic dampers 23 has fan blades 23.

Third Embodiment

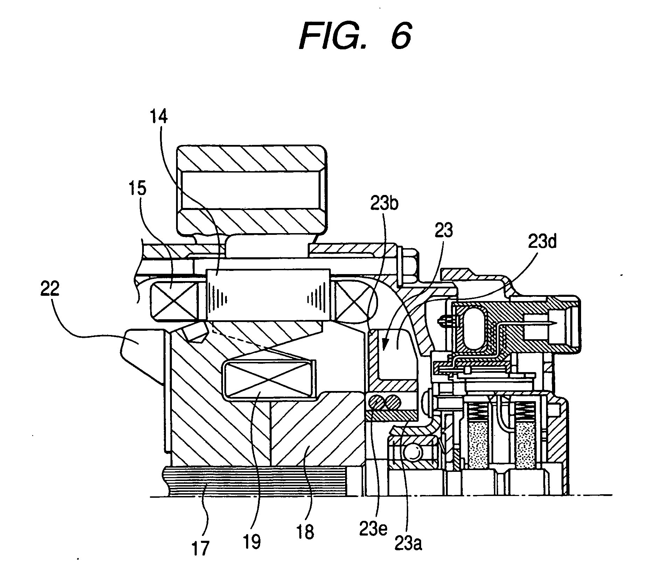

Fig. 6 is a partial cross-sectional view of an alternator 2 of an engine driven system according to a third embodiment of the invention. In the third embodiment, a torsion spring 23e is used as the elastic member of the dynamic absorber 23.

The spring 23e is configured to increase its tightness when compressed to have hysteresis characteristics. The dynamic absorber 23 is excellent at heat resistance, because it can be made of only metals.

Fourth Embodiment

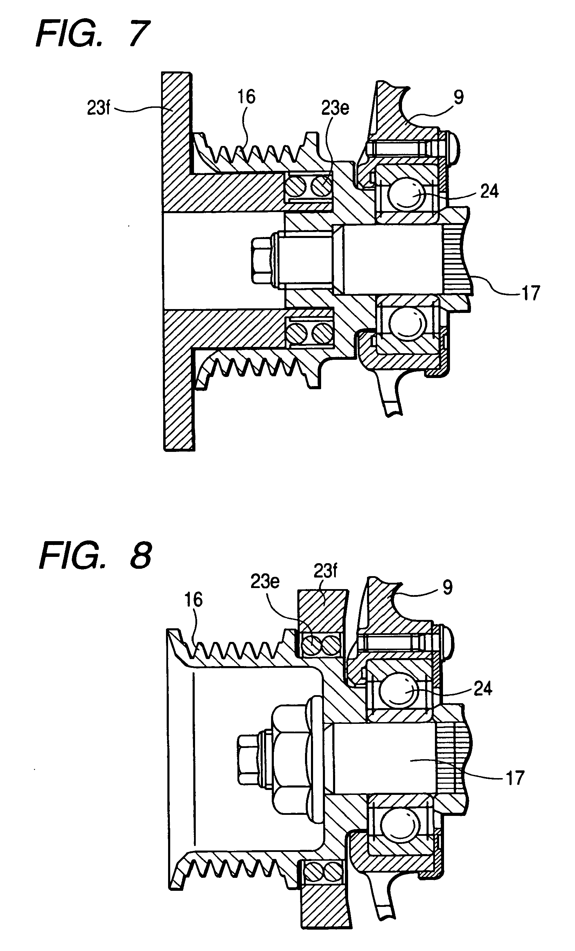

Fig. 7 is a diagram showing a cross section of a portion of an alternator 2 near its pulley 16 of an engine driven system according to a fourth embodiment of the invention. As shown in this figure, the fourth embodiment is characterized in that the dynamic absorber 23 is installed in the pulley 16.

The dynamic absorber 23 is constituted by a spring 23e as an elastic member and an inertia moment member 23f. The inertia moment member 23f is movably fitted in the inner bore of the pulley 16 through the spring 23e.

With this embodiment, it is not necessary to upsize the alternator 2 to provide the alternator 2 with the dynamic absorber 23, since the inner bore of the pulley 16 is used as a space for housing the dynamic absorber 23.

Furthermore, the production costs of the alternator 2 can be made lower, because the alternator 2 can be manufactured only by replacing a conventional pulley with the above described pulley 16, and the manufacturing facility therefore needs only very small change.

In addition, if the dynamic absorber 23 becomes out of order, it does not have a direct effect on the power generating function of the alternator 2.

Fifth Embodiment

Fig. 8 is a diagram showing a cross section of a portion of an alternator 2 near its pulley 16 of an engine driven system according to a fifth embodiment of the invention. As shown in this figure, the fifth embodiment is characterized in that the dynamic absorber 23 is installed between the pulley 16 and the front housing member 9.

As in the case of the fourth embodiment, the dynamic absorber 23 is constituted by the spring 23e and the inertia moment member 23f. The inertia moment member 23f is movably mounted on the alternator 2 through the spring 23e.

The fifth embodiment provides the same advantages as the fourth embodiment.

The above explained preferred embodiments are exemplary of the invention of the present application which is described solely by the claims appended below. It should be understood that modifications of the preferred embodiments may be made as would occur to one of skill in the art.

**Claims**

**1.** An engine belt-driven system comprising:

a plurality of auxiliaries (3, 4, 5) including a vehicle generator (2); and
a V-ribbed belt (8) transmitting torque from a crank pulley of a vehicle engine (1) to a plurality of driven pulleys (2, 3, 4, 5) of said plurality of said auxiliaries (3, 4, 5), wherein said vehicle generator (2) is provided with a pulley (16) at an end of a rotating shaft (17) and is also belt-driven by said V-ribbed belt (8) and directly connected to the rotating shaft (17) of a Lundell type rotor core (18) provided with an integral cooling fan (22) of said vehicle generator (2) and comprising a field winding (19) wound around the rotor core (18), and a dynamic absorber (23) made of metal,

said dynamic absorber (23) including an inertia moment member (23f) having an inertia moment smaller than an inertia moment of said rotor, and an elastic member (23e) coupling said inertia moment member to said rotor, said elastic member (23e) being formed by a torsion spring (23e) configured to increase tightness thereof when compressed; wherein

(1) the vehicle generator (2) is driven with a step-up ratio larger than 2 corresponding to a ratio of diameter of the crank pulley (16) of the vehicle engine to the diameter of the driven pulley (2, 3, 4, 5) of the auxiliary, wherein said vehicle generator (2) has a low outer diameter pulley;
(2) the structure of said dynamic absorber (23) comprises coaxial inner (23a) and outer (23b) rings and an elastic member (23c) press-fitted in between;
(3) said dynamic absorber (23) is installed within the vehicle generator (2) at the non-pulley side end surface or the pulley-side end surface of the rotor core (18);
(4) each dynamic absorber (23) having fan blades,
(5) the inner bore of pulley is used as space for housing the dynamic absorber (23), or the dynamic absorber (23) is installed between the pulley (16) and a housing member (10); and
(6) a resonance frequency of the dynamic absorber (23) determined by mass of the inertia moment member (23f) and a spring constant of the torsion spring (23e) is set to such a value as to suppress resonance in an engine idle region of the vehicle engine (1).

2. The engine belt-driven system according to claim 1, wherein an outer diameter of said pulley (16) is smaller than 59 mm.

3. The engine belt-driven system according to claim 1, wherein said engine belt-driven system forms a serpentine belt-driven system.

4. The engine belt-driven system according to claim 1, wherein said end surfaces of the rotor core (18) are perpendicular to the rotating shaft (17) of said rotor.

5. The engine belt-driven system according to claim 1, wherein said dynamic absorber (23) includes a member (23d) creating air resistance when said dynamic absorber (23) rotates.

6. The engine belt-driven system according to claim 5, wherein said member (23d) is constituted by fan blades, said fan blades creating a cooling wind used for cooling a winding (15) wound around a stator of said vehicle alternator (2).

7. The engine belt-driven system according to claim 1, wherein said dynamic absorber (23) is movably fitted in an inner bore of said pulley (16).

**Patentansprüche**

1. Motor-Riementriebsystem, aufweisend:

eine Vielzahl von Hilfsreinrichtungen (3, 4, 5), die einen Fahrzeuggenerator (2) beinhaltet; und
einen Keilrippenriemen (8), der ein Drehmoment von einer Kurbel-Riemenscheibe eines Fahrzeug-Verbrennungsmotors (1) auf eine Vielzahl von Abtriebs-Riemenscheiben (2, 3, 4, 5) der Vielzahl von Hilfsreinrichtungen (3, 4, 5) überträgt, wobei der Fahrzeuggenerator (2) mit einer Riemenscheibe (16) an einem Ende einer Drehwelle (17) versehen ist und ebenfalls von dem Keilrippenriemen (8) angetrieben wird und direkt mit der Drehwelle (17) eines Lundell-Rotorkems (18), der mit einem integralen Kühlgebläse (22) des Fahrzeuggenerators (2) versehen ist, verbunden ist, und der Fahrzeuggenerator (2) eine Feldwicklung (19), die um den Rotorkern (18) gewickelt ist, und einen dynamischen Dämpfer (23) aus Metall aufweist,

wobei der dynamische Dämpfer (23) ein Trägheitsmomentelement (23f) mit einem Trägheitsmoment, das kleiner ist als ein Trägheitsmoment des Rotors, und ein elastisches Element (23e), welches das Trägheitsmomentelement mit dem Rotor verbindet, aufweist, wobei das elastische Element (23e) von einer Drehfeder (23e) gebildet wird, die so ausgelegt ist, dass ihre Spannung zunimmt, wenn sie zusammengedrückt wird, wobei

(1) der Fahrzeuggenerator (2) mit einem Übersetzungsverhältnis von über 2 angetrieben wird, das einem Verhältnis von Durchmesser der Kurbel-Riemenscheibe (16) des Fahrzeug-Verbrennungsmotors zu Durchmesser der Abtriebs-Riemenscheibe (2, 3, 4, 5) der Hilfseinrichtung entspricht, wobei der Fahrzeuggenerator (2) eine Riemenscheibe mit geringem Außendurchmesser aufweist;

(2) der Aufbau des dynamischen Dämpfers (23) koaxiale innere (23a) und äußere (23b) Ringe und ein dazwischen eingepresstes elastisches Element (23c) aufweist;

(3) der dynamische Dämpfer (23) im Fahrzeuggenerator (2) an der Stirnfläche des Rotorkerns (18) auf der Seite, wo sich keine Riemenscheibe befindet, oder an der Stirnfläche auf der Seite, wo sich die Riemenscheibe befindet, montiert ist;

(4) jeder dynamische Dämpfer (23) Gebläseflügel aufweist,

(5) die innere Bohrung der Riemenscheibe als Raum zum Unterbringen des dynamischen Dämpfers (23) genutzt wird, oder der dynamische Dämpfer (23) zwischen der Riemenscheibe (16) und einem Gehäuseelement (10) montiert ist; und

(6) eine Resonanzfrequenz des dynamischen Dämpfers (23), die von der Masse des Trägheitsmomentelements (23f) und einer Federkonstante der Drehfeder (23e) bestimmt wird, auf einen Wert eingestellt ist, mit dem eine Resonanz in einer Leerlaufregion des Fahrzeug-Verbrennungsmotors (1) unterdrückt werden kann.

**2.** Motor-Riementriebsystem nach Anspruch 1, wobei ein Außendurchmesser der Riemenscheibe (16) kleiner ist als 59 mm.

**3.** Motor-Riementriebsystem nach Anspruch 1, wobei das Motor-Riementriebsystem ein Serpentinen-Riementriebsystem bildet.

**4.** Motor-Riementriebsystem nach Anspruch 1, wobei die Stirnflächen des Rotorkems (18) senkrecht sind zur Drehwelle (17) des Rotors.

**5.** Motor-Riementriebsystem nach Anspruch 1, wobei der dynamische Dämpfer (23) ein Element (23d) beinhaltet, das einen Luftwiderstand erzeugt, wenn der dynamische Dämpfer (23) sich dreht.

**6.** Motor-Riementriebsystem nach Anspruch 5, wobei das Element (23d) aus Gebläseflügeln besteht, wobei die Gebläseflügel einen Kühlwind erzeugen, der zum Kühlen einer Wicklung (15) verwendet wird, die um einen Stator des Fahrzeugalternators (2) herum gewickelt ist.

**7.** Motor-Riementriebsystem nach Anspruch 1, wobei der dynamische Dämpfer (23) in eine innere Bohrung der Riemenscheibe (16) beweglich eingepasst ist.

## Revendications

**1.** Système entraîné par une courroie d'un moteur comprenant :

une pluralité d'auxiliaires (3, 4, 5) comportant un générateur (2) de véhicule; et
une courroie striée (8) transmettant un couple d'une poulie de vilebrequin du moteur (1) d'un véhicule à une pluralité de poulies entraînées (2, 3, 4, 5) de ladite pluralité desdits auxiliaires (3, 4, 5), où ledit générateur (2) de véhicule est muni d'une poulie (16) à une extrémité d'un arbre rotatif (17) et est également entraîné par courroie par ladite courroie striée (8) et directement relié à l'arbre rotatif (17) d'un noyau (18) de rotor de type Lundell muni d'un ventilateur intégral (22) dudit générateur (2) de véhicule et comprenant un bobinage (19) de champ enroulé autour du noyau (18) de rotor, et un absorbeur dynamique (23) fait en métal.

ledit absorbeur dynamique (23) comportant un élément (23f) à moment d'inertie qui a un moment d'inertie inférieur à un moment d'inertie dudit rotor, et un élément élastique (23e) couplant ledit élément à moment d'inertie audit rotor, ledit élément élastique (23e) étant formé par un ressort de torsion (23e) configuré pour accroître sa raideur lorsqu'il est comprimé ; où

(1) le générateur (2) de véhicule est entraîné avec un rapport de transmission plus grand que 2 correspondant à un rapport de diamètre de la poulie (16) de vilebrequin du moteur du véhicule par le diamètre de la poulie entraînée (2, 3, 4, 5) de l'auxiliaire, où ledit générateur (2) de véhicule possède une poulie à faible diamètre extérieur ;

(2) la structure dudit absorbeur dynamique (23) comprend des anneaux coaxiaux interne (23a) et externe (23b) et un élément élastique (23c) ajusté avec serrage entre eux ;

(3) ledit absorbeur dynamique (23) est installé dans le générateur (2) de véhicule au niveau de la surface d'extrémité côté loin de la poulie ou de la surface d'extrémité côté poulie du noyau (18) de rotor ;

(4) chaque absorbeur dynamique (23) ayant des pales de ventilateur,

(5) l'alésage interne de poulie est utilisé comme espace pour loger l'absorbeur dynamique (23), ou l'absorbeur dynamique (23) est installé entre la poulie (16) et un élément de réception (10) ; et

(6) une fréquence de résonance de l'absorbeur dynamique (23) déterminée par masse de l'élément (23f) à moment d'inertie et une constante de ressort du ressort de torsion (23e) sont établies à une valeur telle que la résonance est éliminée dans une région de ralenti du moteur (1) de véhicule.

2. Système entraîné par courroie d'un moteur selon la revendication 1, dans lequel un diamètre extérieur de ladite poulie (16) est inférieur à 59 mm.

3. Système entraîné par courroie d'un moteur selon la revendication 1, dans lequel ledit système entraîné par courroie du moteur forme un système entraîné par courroie multifonction.

4. Système entraîné par courroie d'un moteur selon la revendication 1, dans lequel lesdites surfaces d'extrémité du noyau (18) de rotor sont perpendiculaires à l'arbre rotatif (17) dudit rotor.

5. Système entraîné par courroie d'un moteur selon la revendication 1, dans lequel ledit absorbeur dynamique (23) comporte un élément (23d) créant une résistance à l'air lorsque ledit absorbeur dynamique (23) tourne.

6. Système entraîné par courroie d'un moteur selon la revendication 5, dans lequel ledit élément (23d) est constitué de pales de ventilateur, lesdites pales de ventilateur créant une bobine de refroidissement utilisée pour refroidir un bobinage (15) enroulé autour d'un stator dudit alternateur (2) de véhicule.

7. Système entraîné par courroie d'un moteur selon la revendication 1, dans lequel ledit absorbeur dynamique (23) est ajusté de manière mobile dans un alésage interne de ladite poulie (16).

FIG. 3

23

23d

23c

23b

23a

18

17

FIG. 1

5

8

7

2

6

4

3

1

# FIG. 2

# FIG. 4

# FIG. 5

# FIG. 6

## FIG. 7

## FIG. 8

# FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2486324 A1
- US 3906266 A
- FR 2435618 A
- WO 9850709 A
- JP 61228153 A